# EUROPEAN PATENT APPLICATION

(11) **EP 2 273 011 A1**
(43) Date of publication of application: **12.01.2011**
(21) Application number: 09720830.0
(22) Date of filing: 26.02.2009
(51) Int. Cl.: E01C 7/35, C09D 5/02, C09D 125/08, C09D 133/04, C09D 167/00

(54) **WATER-BASED BINDER COMPOSITION FOR PAVING AND METHOD OF TREATING PAVEMENT SURFACE WITH THE SAME**

(30) Priority: 12.03.2008 JP 2008062812
(71) Applicant: SHOWA DENKO K.K., Tokyo 105-8518 (JP)
(72) Inventor: DOI, Mitsuru, Tatsuno-shi Hyogo 679-4155 (JP); FUJITA, Ryuichi, Tokyo 105-8518 (JP)
(74) Representative: Collin, Jérôme
(86) International application number: PCT/JP2009/053571
(87) International publication number: WO 2009/113401

(57) **Abstract**

The present invention relates to an aqueous paving binder composition comprising a synthetic resin emulsion comprising a water-soluble or water-dispersible polyester as a protective colloid. The synthetic resin is preferably a styrene-(meth) acrylic acid ester copolymer or a (meth)acrylic acid ester copolymer. In addition, the amount of the water-soluble or water-dispersible polyester is preferably in the range of 2 to 50% by mass, based on the amount of the synthetic resin. The aqueous paving binder composition of the present invention does not generate odors in paving work, is environmentally friendly, and is excellent in abrasion resistance and water resistance.

## Description

### Technical Field

The present invention relates to an aqueous paving binder composition and a method for treating the surface of a pavement using the same.

### Background Art

In parks, amusement parks, walking trails, vehicular roads and the like, in order to provide an excellent design, clarify sections and prevent slipping, landscape or colored pavements have been provided by coating a binder composition comprising an inorganic substance such as quartz sand, a colored aggregate and the like and a binder on the asphalt or concrete and drying it.
In addition, in order to prevent rain from remaining on asphalt pavements, drainage pavement to increase the porosity of the pavements with open-graded asphalt has frequently been provided in recent years. The above-described pavement has a surface which is weaker than that of ordinary asphalt pavement, and thus an aggregate is easily removed from the pavement when vehicles pass over the pavement. Therefore, a resin is frequently coated on the surface of the pavement to increase the adherence of the aggregate to the pavement.

A large number of the binders for paving roads , for example, a composition comprising a vinyl ester resin, a vinyl urethane resin, an unsaturated polyester and a polymeric monomer (for example, see References 1 and 2), a composition comprising an epoxy resin (for example, see Reference 3), an acryl syrup (for example, see Reference 4) and the like have been provided.

Patent Reference 1: Japanese Patent Application Laid-open No. 2005-98022
Patent Reference 2: Japanese Patent Application Laid-open No. 2006-124460
Patent Reference 3: Japanese Patent Application Laid-open No. 2005-256329
Patent Reference 4: Japanese Patent Application Laid-open No. 5-222705

### Disclosure of the Invention

### Problems to be solved by the Invention

The compositions described in References 1 to 4 exhibit excellent physical properties such as abrasion resistance, water resistance and the like, but they comprise an amine as a solvent or a hardening agent. Therefore, there are health problems such as generation of odors in paving work and the like and environmental problems.
The present invention was made to solve the above problems, and the object of the present invention is to provide an aqueous paving binder composition which does not generate odors in paving work, and is excellent in abrasion resistance and water resistance.

### Means for solving the problems

The inventors of the present application, after conducting intensive studies and development for solving the conventional problems described above, have found that the above problems can be solved by using a synthetic resin emulsion comprising a water-soluble or water-dispersihie polyester as a protective colloid in an aqueous paving binder, to complete the present invention.
Namely, the present invention relates to an aqueous paving binder composition comprising a synthetic resin emulsion comprising a water-soluble or water-dispersible polyester as a protective colloid.
In the present invention, the synthetic resin is preferably a styrene-(meth)acrylic acid ester copolymer or a (meth)aorylic acid ester copolymer.
In addition, in the present invention, it is preferable that the water-soluble or water-dispersible polyester has a carboxyl group. It is more preferable that the carboxyl group of the water-soluble or water-dispersible polyester and the synthetic resin are crosslinked by a crosslinking agent having two or more functional groups, such as epoxy groups, reactive with the carboxyl group.
The amount of the water-soluble or water-dispersible polyester is preferably in the range of 2 to 50% by mass, based on the amount of the synthetic resin.
In addition, the present invention relates to a method for treating a surface of a pavement comprising applying the above aqueous paving binder composition on the surface and drying it.

### Effects of the Invention

According to the present invention, an aqueous paving binder composition which does not generate odors in paving work, is environmentally friendly, and is excellent in abrasion resistance and water resistance can be provided.

### Best mode for carrying out the Invention

The details of the present invention will be explained below.

The aqueous paving binder composition of the present invention comprises a synthetic resin emulsion comprising a water-soluble or water-dispersible polyester as a protective colloid. The amount of the water-soluble or water-dispersible polyester is preferably 2 to 50% by mass, more preferably 5 to 40% by mass, based on the synthetic resin. If the water-soluble or water-dispersible polyester is less than 2% by mass, there are cases where the abrasion resistance is reduced. On the other hand, if it accounts for more than 50% by mass, there are cases where the water resistance is reduced.

The amount of nonvolatile components of the synthetic resin emulsion is preferably in the range of between 30% by mass and 60% by mass. If the nonvolatile components account for less than 30% by mass, it is not preferable because the period of time required for the emulsion to be dried is increased. If the nonvolatile components account for more than 60% by mass, it is not preferable because the viscosity of the synthetic resin emulsion becomes extremely high. Considering ease in handling and coating of the aqueous paving binder composition, the viscosity of the synthetic resin emulsion is preferably 3,000 mPa·s or less.

The synthetic resin emulsion of the present invention can be obtained by performing a radical polymerization of an ethylenically unsaturated monomer composition in the presence of the water-soluble or water-dispersible polyester. As described above, the amount of the water-soluble or water-dispersible polyester is preferably 2 to 50% by mass, more preferably 5 to 40% by mass, based on the ethylenically unsaturated monomer composition.
The ethylenically unsaturated monomers used in the present invention may be any monomer which contains at least one polymerizable vinyl group. Examples thereof include (meth)acryltc acid esters having a linear, branched or cyclic alkyl chain, aromatic vinyl compounds such as styrene, α-metbylstyrene and the like, hydroxyalkyl (meth)acrylates, alkylamino(meth)acrylates, vinyl esters represented by vinyl acetate and vinyl alkanoates, monoolefins (ethylene, propylene, butylene, isobutylene and the like), α,β-unsaturated mono- or dicarboxylic acids (acrylic acid, methacrylic acid, crotonic acid, itaconic acid, maleic acid, fumaric acid and the like), ethylenically unsaturated monomers containing a carbonyl group such as diacetone acrylamide and the like, ethylenically unsaturated monomers containing a sulfonic acid group such as p-toluenesulfonic acid and the like. These ethylenically unsaturated monomers may be used alone or two or more thereof may be used in combination. Among them, for reasons of ease in conducting radical polymerization and in order to increase water resistance of the aqueous paving binder composition, methyl methacrylate, n-butyl (meth)acrylate, 2-ethylhexyl acrylate, hydroxyethyl (meth)acrylate and styrene are preferable. Namely, the synthetic resin is preferably a styrene-(meth)acrylic acid ester copolymer or a (meth)acrylic acid ester copolymer obtained using these ethylenically unsaturated monomers.

Further, as needed, crosslinking monomers including epoxy group-containing α,β-ethylenically unsaturated compounds such as glycidyl (meth)acrylate and the like, α,β-ethylenically unsaturated compounds containing a hydrolysable alkoxysilyl group such as vinyltriethoxysilane, γ'-methacryloxypropyltriethoxysilane and the like, polyfunctional vinyl compounds (ethylene glycol di(meth)acrylate, trimethylolpropane tri(meth)acrylate, allyl (meth)acrylate, divinylbenzene, diallyl phthalate and the like) are introduced into the copolymer so as to crosslink the monomers per se or to crosslink the monomers with an ethylenically unsaturated compound component having an active hydrogen group, or crosslinking monomers such as α,β-ethylenically unsaturated compounds containing a carbonyl group (in particular, the compounds are limited to those containing a keto group) and the like are introduced into the copolymer to crosslink the monomers with a polyhydrazine compound (in particular, a compound having two or more hydrazide groups, such as dihydrazide oxalate, dihydrazide succinate, dihydrazide adipate, hydrazide polyacrylate and the like). The abrasion resistance of the aqueous paving binder composition can be increased by introducing crosslinking monomers into the copolymer, as described above.

The water-soluble or water-dispersible polyester used in the present invention is a conventional one obtained by neutralizing a polymer prepared by polymerization of a polybasic acid with a polyol.
As the polybasic acid, for example, terephthalic acid, isophthalic acid, phthalic acid, naphthaline dicarboxylic acid, adipic acid, succinic acid, sebacic acid, dodecanedioic acid and the like may be used. They may be used alone or two or more thereof may be used in combination.
The polyol includes ethylene glycol, propylene glycol, 1,4-butanediol, 1,6-hexanediol, neopentyl glycol, diethylene glycol, dipropylene glycol, cyclohexanedimethanol, bisphenol and the like. They may be used alone or two or more thereof may be used in combination.

A polymerizable component containing a hydrophilic group such as a carboxyl group, a sulfonic acid group or the like may be copolymerized so as to further improve the water-solubility or water-dispersibility of the polyester.
In order to introduce a carboxyl group as a specific example of the hydrophilic group into a polyester molecule, for example, trimellitic acid (anhydride), pyromellitic acid (anhydride), trimesic acid or the like is used as one polymerizable component, and the obtained polymer is neutralized by an amino compound, ammonia, an alkali metal or the like. When a carboxyl group is introduced into the molecule, it is preferable to adjust the acid value of the polyester to 1 to 100. If the acid value is more than 100, the water resistance of the polyester is insufficient, and there are cases where the water resistance of the aqueous paving binder composition is reduced. On the other hand, if the acid value is less than 1, there are cases where the water resistance of the aqueous paving binder composition cannot be sufficiently increased after addition of a crosslinking agent described below.
In addition, in order to introduce a sulfonic acid group into a polyester molecule, an alkali metal salt or an ammonium salt of 5-sulfoisophthalic acid, sulfoterephthalic acid, 4-sulfophthalic acid, 4-sulfonaphthalene-2,7-dicaroboxylic acid and the like is used as a polymerizable component, and the obtained polymer is neutralized with an amino compound, ammonia, an alkali metal or the like.

Among the above water-soluble or water-dispersible polyesters, those containing a carboxyl group as a functional group are preferable. The stability of the emulsion particles in radical polymerization is improved by using a water-soluble or water-dispersible polyester containing a carboxyl group. Further, it is relatively easy to perform crosslinking reactions using a carboxyl group. Therefore, a crosslinking agent reactive with a carboxyl group is added to crosslink a water-soluble or water-dispersible polyester with a synthetic resin so as to further improve the abrasion resistance and water resistance of the aqueous paving binder composition.

Commercially available water-soluble or water-dispersible polyesters having a carboxyl group per se may be used. Examples thereof include Plascoat Z-561, Z-730 and RZ-142 (manufactured by Goo Chemical Co., Ltd.), Pesresin A-110, A-210 and A-620 (manufactured by Takamatsu Oil & Fat Co., Ltd.), Vylonal (registered trade name), **MD**-1200, **MD**-1220, **MD**-1250, **MD**-1335, MD-1400, **MD**-1480 and MD-1500(manufactured by TOYOBO Co., Ltd.)

The crosslinking agent used in the present invention has two or more functional groups capable of reacting with the carboxyl group of the water-soluble or water-dispersible polyester, for example, epoxy groups. As examples of the crosslinking agent containing at least two epoxy groups (including alicyclic groups), polyfunctional epoxy compounds such as adipic acid diglycidyl ester, phthalic acid diglycidyl ester, ethylene glycol diglycidyl ether, polyethylene glycol diglycidyl ether, propylene glycol diglycidyl ether, polypropylene glycol diglycidyl ether, glycerin polyglycidyl ether, pentaerythritol polyglycidyl ether, sorbitol polyglycidyl ether, trimethylpropane polyglycidyl ether, neopentyl glycol glycidyl ether, bisphenol A glycidyl ether and the like may be exemplified. They may be used alone, or two or more thereof may be used in combination. Among them, glycerin polyglycidyl ether is preferable because of excellent dispersibility in an emulsion and high crosslinking efficiency thereof.

The amount of the crosslinking agent used is preferably 1 to 40% by mass, more preferably 5 to 20% by mass, based on the water-soluble or water-dispersible polyester having a carboxyl group. If the amount of the crosslinking agent used is less than 1% by mass, there are cases where the water resistance of the aqueous paving binder composition cannot, be sufficiently improved. On the other hand, if it is more than 40% by mass, there are cases where non-reacted crosslinking agent remains in the aqueous paving binder composition, and the water resistance of the composition would be reduced.

As a method for adding a crosslinking agent, it is preferable to add the crosslinking agent during radical polymerization so as to increase the reactivity of the carboxyl group of the water-soluble or water-dispersible polyester. More specifically, the crosslinking agent is dissolved in an ethylenically unsaturated monomer composition, and then the mixture in a uniform state is charged into the polymerization system when a radical polymerization is conducted.

As described above, the synthetic resin emulsion of the present invention can be obtained by conducting a radical polymerization of an ethylenically unsaturated monomer composition in the presence of the water-soluble or water-dispersible polyester. The polymerization reaction is conducted using a normal pressure reactor or a pressure-resistant reactor by a batch-type, semicontinuous -type or continuous type technique. The polymerization reaction is ordinary conducted at a reaction temperature of 10 to 100ºC, generally at 30 to 90ºC, The reaction time is not particularly limited, and may be optionally adjusted, depending on the amount of each component, a reaction temperature and the like. In the radical polymerization, the water-soluble or water-dispersible polyester which is a protective colloid contributes to the stability of the emulsion particles. However, as necessary, an anionic emulsifying agent, a nonionic emulsifying agent, a reactive emulsifying agent or the like may be added to the polymerization system. The type and the amount of the emulsifying agent used may be optionally adjusted, depending on the amount of the water-soluble or water-dispersible polyester used, the composition of ethylenically unsaturated monomers and the like.

Examples of these emulsifying agents include nonionic surfactants such as polyoxyalkylene alkyl ethers, polyoxyalkylene alkylphenol ethers, polyoxyalkylene fatty acid esters, polyoxyalkylene sorbitan fatty acid esters and the like, alkyl sulfates, alkylbenzene sulfonates, alkyl sulfosuccinates, alkyl diphenylether disulfonates, polyoxyalkylene alkyl sulfates, and polyoxyalkylene alkyl phosphates, They may be used alone, or two or more thereof may be used in combination. In addition, a water-soluble polymer such as polyvinyl alcohol, methylcellulose, carboxymethyl cellulose, hydroxyethyl cellulose, hydroxypropyl cellulose, polyvinyl pyrrolidone or the like may be added to the polymerization system in such a manner that the water resistance of the obtained aqueous paving binder composition would not be reduced.

The polymerization initiator used in radical polymerization may be a publically known and generally used one. Examples thereof include hydrogen peroxide, ammonium persulfate, potassium persulfate, sodium persulfate, t-butylhydroperoxide and the like. In addition, as necessary, these polymerization initiators may be combined with sodium sulfoxylate formaldehyde, ascorbic acids, sulfite, tartaric acid or salts thereof to conduct a redox polymerization. In addition, a chain transfer agent such as an alcohol, a mercaptan or the like may be used.

A variety of additives including a resin component such as an acrylic resin, an ethylene-vinyl acetate resin, a vinyl acetate resin, an epoxy resin, an amino resin, an urethane resin and the like, an isocyanate crosslinking agent, a viscosity improver, a colorant, an antiblocking agent, an antifoaming agent, a film formation auxiliary agent and the like may be added to the aqueous paving binder composition of the present invention in such a manner that the effect of the present invention would not be reduced. Further, when the aqueous binder paving composition of the present invention is coated on general asphalt pavements, it may be used by mixing with a colored aggregate, quartz sand, cement or the like.

The aqueous paving binder composition of the present invention does not comprise a solvent or an amine hardening agent, and thus it does not generate odors in paving work, is environmentally friendly and is excellent in physical properties such as abrasion resistance, water resistance and the like. A layer which is excellent in physical properties such as abrasion resistance, water resistance and the like and is useful for clarifying sections and preventing slip can be formed by coating the aqueous paving binder composition of the present invention on the surface to be paved of general asphalt, concrete or the like, and drying it at room temperature. In particular, if the aqueous paving binder composition of the present invention is coated on drainage asphalt pavement, the surface to be paved can be strongly reinforced. As a method for coating the aqueous paving binder composition, spray coating, roller coating, dispersion with a watering pot, trowel-coating and the like are exemplified. The coating amount of the aqueous paving binder composition may be optionally selected, depending on the type of pavement, but is preferably 0.2 to 2.0 kg/m².

### Examples

The present invention is more specifically explained, with reference to the examples and comparative examples below, but is not limited thereto. Please note that the properties of the resin emulsions of the examples and the comparative examples are evaluated by the following methods.

### (Nonvolatile components)

About 1 g of a resin emulsion was measured on an aluminum dish having a diameter of 5 cm, and was dried at 105ºC for one hour. The weight of the residue was measured to obtain the weight of the nonvolatile components.

### (Viscosity)

Viscosity was determined using a Brookfield type rotating viscometer at a liquid temperature of 23ºC, at a rotational number of 60 rpm in a No, 2 rotor.

### (Glass transition temperature (Tg))

After the resin emulsion was dried under the conditions at 23ºC at 65%RH for one week, Tg was determined by a differential scanning calorimeter (DSC, SSC5200, manufactured by Seiko Instruments Inc.)

### (Minimum Film Formation Temperature (MFT))

It was determined, in accordance with JIS K 6828.

### (Example 1)

In a homomixer 150 parts by mass of styrene, 115 parts by mass of methyl methacrylate, 81 parts by mass of 2-ethylhexyl acrylate, 7 parts by mass of 2-hydroxyethyl methacrylate, 3 parts by mass of an anionic emulsifying agent (Hitenol (registered trade name) 08E, manufactured by DAI-ICHI KOGYO SEIYAKU CO., LTD.) and 110 parts by mass of deionized water were mixed and emulsified to prepare an ethylenically unsaturated monomer emulsion composition.

Into a four-neck flask reactor equipped with a stirrer, a thermometer and a reflux condenser, 138 parts by mass of Plascoat Z-730 (nonvolatile components: 25% by mass, a carboxyl group-containing type, glass transition temperature: 46ºC, acid value: 58), and 207 parts by mass of Plascoat Z-561 (nonvolatile components: 25% by mass, a sulfonic acid group-containing type. glass transition temperature: 64ºC, acid value: 2.5) as the water-dispersible polyesters, and 33 parts by mass of deionized water were charged, and the mixture was heated to 80ºC, Next, 0.4 part by mass of potassium persulfate was charged into the reactor, and the step of dropping the ethylenically unsaturated monomer emulsion composition that had been prepared was started. The ethylenically unsaturated monomer emulsion composition and 0.8 part by mass of potassium persulfate which were dissolved in 46 parts by mass of deionized water were dropped over a period of three hours. The temperature in the reactor was kept at 80ºC at the dropping step. After the dropping step, the temperature was kept at 80ºC for one hour, and was decreased to room temperature. To this, 99 parts by mass of 2,2,4-trimethyl-1,3-pentanediol monoisobutylate (CS-12, manufactured by Chisso Corporation) was added as a film formation auxiliary agent to obtain the resin emulsion of Example 1. As the properties of the obtained resin emulsion, nonvolatile components of 50.0% by mass, a viscosity of 300 mPa· s, pH 7.2, a glass transition temperature of 51ºC and a minimum film formation temperature of 0ºC were determined. The amount (% by mass) of the water-dispersible polyesters, based on the synthetic resin are shown in Table 1.

### (Example 2)

Outside of using an ethylenically unsaturated monomer emulsion composition prepared by mixing and emulsifying 150 parts by mass of styrene, 115 parts by mass of methyl methacrylate, 81 parts by mass of 2-ethylhexyl acrylate, 7 parts by mass of 2-hydroxyethyl methacrylate, 3 parts by mass of an anionic emulsifying agent (Hitenol (registered trade name) 08E, manufactured by DAI-ICHI KOGYO SEIYAKU CO., LTD.), 3.5 parts by mass of glycerin polyglycidyl ether as a crosslinking agent and 110 parts by mass of deionized water, the resin emulsion of Example 2 was obtained in the same method as Example 1. As the properties of the obtained resin emulsion, nonvolatile components of 50.1% by mass, a viscosity of 290 mPa·s, pH 7.2, a glass transition temperature of 52ºC and a minimum film formation temperature of 0ºC were determined. The amount (% by mass) of the water-dispersible polyesters, based on the synthetic resin, and the amount (% by mass) of the crosslinking agent, based on the water-dispersible polyesters are shown in Table 1.

### (Example 3)

An ethylenically unsaturated monomer composition was prepared by mixing 113 parts by mass of styrene, 87 parts by mass of methyl methacrylate, 61 parts by mass of 2-ethylhexyl acrylate, and 5 parts by mass of 2-hydroxyethyl methacrylate.

Into a four-neck flask reactor equipped with a stirrer, a thermometer and a reflux condenser, 277 parts by mass of Plascoat Z-730 (nonvolatile components: 25% by mass, a carboxyl group-containing type, glass transition temperature: 46ºC, acid value: 58), and 416 parts by mass of Plascoat Z-561 (nonvolatile components: 25% by mass, a sulfonic acid group-containing type, glass transition temperature: 64ºC, acid value: 2.5) as the water-dispersible polyesters were charged, and the mixture was heated to 80ºC. Next, 0.4 part by mass of potassium persulfate was charged into the reactor, and the step of dropping the ethylenically unsaturated monomer composition was started. The ethylenically unsaturated monomer composition and 0.8 part by mass of potassium persulfate which were dissolved in 35 parts of deionized water were dropped over a period of three hours, The temperature in the reactor was kept at 80ºC at the dropping step. After the dropping step, the temperature was kept at 80ºC for one hour, and was decreased to room temperature. To this, 50 parts by mass of 2,2,4-trimethyl-1,3-pentanediol monoisobutylate (CS-12, manufactured by Chisso Corporation) was added as a film formation auxiliary agent to obtain the resin emulsion of Example 3. As the properties of the obtained resin emulsion, nonvolatile components of 45.5% by mass, a viscosity of 30 mPa· s, pH 7.0, a glass transition temperature of 42ºC and a minimum film formation temperature of 0ºC were determined. The amount (% by mass) of the water-dispersible polyesters, based on the synthetic resin is shown in Table 1.

### (Example 4)

In a homomixer, 210 parts by mass of methyl methacrylate, 136 parts by mass of 2-ethylhexyl acrylate, 7 parts by mass of 2-hydroxyethyl methacrylate, 3 parts by mass of an anionic emulsifying agent (Hitenol (registered trade name) 08E, manufactured by DAI-ICHI KOGYO SEIYAKU CO., LTD.), 2.0 parts by mass of glycerin polyglycidyl ether as a crosslinking agent and 110 parts by mass of deionized water were mixed and emulsified to prepare an ethylenically unsaturated monomer emulsion composition.

Into a four-neck flask reactor equipped with a stirrer, a thermometer and a reflux condenser, 138 parts by mass of Plascoat Z-730 (nonvolatile components: 25% by mass, carboxyl group-containing type, glass transition temperature: 46ºC. acid value: 58), and 207 parts by mass of Plascoat Z-561 (nonvolatile components: 25% by mass, a sulfonic acid group-containing type, glass transition temperature: 64ºC, acid value: 2.5) as the water-dispersible polyesters, and 33 parts by mass of deionized water were charged, and the mixture was heated to 80ºC. Next, 0.4 part by mass of potassium persulfate was charged into the reactor, and the step of dropping the ethylenically unsaturated monomer emulsion composition that had been prepared was started. The ethylenically unsaturated monomer emulsion composition and 0.8 part by mass of potassium persulfate which were dissolved in 46 parts by mass of deionized water were dropped over a period of three hours. The temperature in the reactor was kept at 80ºC at the dropping step. After the dropping step, the temperature was kept at 80ºC for one hour, and was decreased to room temperature. To this, 36 parts by mass of 2,2,4-trimethyl-1,3-pentanediol monoisobutylate (CS-12, manufactured by Chisso Corporation) was added as a film formation auxiliary agent to obtain the resin emulsion of Example 4. As the properties of the obtained resin emulsion, nonvolatile components of 50.0% by mass, a viscosity of 110 mPa· s, pH 7.3, a glass transition temperature of 18ºC and a minimum film formation temperature of 0ºC were determined. The amount (% by mass) of the water-dispersible polyesters, based on the synthetic resin, and the added amount of the crosslinking agent (% by mass), based on the water-dispersible polyesters are shown in Table 1.

### (Comparative Example 1)

To 100 parts by mass of Plascoat Z-561 (nonvolatile components: 25% by mass, a sulfonic acid group-containing type, glass transition temperature: 64QC, acid value: 2.5) which is a water-dispersible polyester, 4 parts by mass of 2,2,4-trimethyl-1,3-pentanediol monoisobutylate (CS-12, manufactured by Chisso Corporation) was added as a film formation auxiliary agent to obtain the resin emulsion of Comparative Example 1.

### (Comparative Example 2)

A styrene-acrylic acid ester copolymer (Polysol (registered trade name) AP-4750, manufactured by SHOWA HIGHPOLYMER CO., LTD., nonvolatile components: 46% by mass, glass transition temperature: 30ºC, a minimum film formation temperature: 0ºC) was used as a resin emulsion of Comparative Example 2.

### (Comparative Example 3)

An ethylene-vinyl acetate copolymer (Polysol (registered trade name) P-3N, manufactured by SHOWA HIGHPOLYMER CO., LTD., nonvolatile components: 50% by mass, glass transition temperature: 14ºC, a minimum film formation temperature: 2ºC) was used as a resin emulsion of Comparative Example 3.

**Table 1**

| | Example 1 | Example 2 | Example 3 | Example 4 |
|---|---|---|---|---|
| Amount (% by mass) of the polyesters, based on the synthetic resin | 24.5 | 24.5 | 65.1 | 24.5 |
| Added amount (% by mass) of the crosslinking agent, based on the polyesters having a carboxyl group | 0 | 10.1 | 0 | 5.8 |

The resin emulsions of the examples and the comparative examples were evaluated by the following methods.

### (Evaluation of abrasion resistance)

Aqueous paving binder compositions having a composition ratio described in Table 2 below were prepared using the resin emulsions of the examples and the comparative examples. The added amount of the thickening agent was optionally adjusted so that the aqueous paving binder composition had a viscosity of about 10,000 mPa·s.

The obtained aqueous paving binder composition was coated on a slate plate so as to achieve 1kg/m², was left under conditions of 23ºC at 65%RH for one week, and abrasion loss was determined by the JIS K 5600 Taber test (a wear ring method, loading 500g, 500 rotations, a rotation number of 70 rpm, wear ring CF-17). If the abrasion loss is less than 1 mg, it can be said that the composition is sufficiently durable in practical use. The results thereof are shown in Tables 3 and 4.

**Table 2**

| | |
|---|---|
| No. 7 quartz sand | 80 parts by mass |
| No. 6 quartz sand | 80 parts by mass |
| Resin emulsion | 80 parts by mass |
| Water | 20 parts by mass |
| Thickening agent | Appropriate amount |

### (Evaluation of water resistance)

The resin emulsions of the examples and comparative examples were coated on a glass plate using a 6 mil applicator, were left under conditions of 23ºC at 65% RH for one week, and then were immersed in water at 23ºC. When there is little whitening level of the emulsion, the emulsion was evaluated with an open circle. When the whitening level thereof was small, it was evaluated with an open triangle. When the whitening level thereof was remarkable, it was evaluated with a cross mark. The results thereof are shown in Tables 3 and 4.

**Table 3**

| | Example 1 | Example 2 | Example 3 | Example 4 |
|---|---|---|---|---|
| Abrasion loss (mg) | 0.4 | 0 | 0.3 | 0.1 |
| Water resistance | ○ | ○ | △ | ○ |

**Table 4**

| | Comparative Example 1 | Comparative Example 2 | Comparative Example 3 |
|---|---|---|---|
| Abrasion loss (mg) | 1.3 | 1.5 | 2.0 |
| Water resistance | × | ○ | ○ |

As shown in the results of Tables 3 and 4, the water resistance of the aqueous paving binder compositions of Examples 1, 2 and 4 was the same as that of Comparative Examples 2 and 3, but the abrasion resistance thereof was remarkably superior, compared with that of Comparative Examples 2 and 3. The water resistance of the aqueous paving binder composition of Example 3 was poor by a small degree, compared with that of Comparative Examples 2 and 3, but the level of the water resistance of Example 3 is acceptable in practical use.

## Claims

1. An aqueous paving binder composition comprising a synthetic resin emulsion comprising a water-soluble or water-dispersible polyester as a protective colloid.

2. The aqueous paving binder composition according to Claim 1, wherein said synthetic resin is a styrene-(meth)acrylic acid ester copolymer or a (meth)acrylic acid ester copolymer.

3. The aqueous paving binder composition according to Claim 1 or 2, wherein said water-soluble or water-dispersible polyester has a carboxyl group.

4. The aqueous paving binder composition according to Claim 3, wherein said water-soluble or water-dispersible polyester is crosslinked with said synthetic resin by a crosslinking agent having two or more functional groups capable of reacting with a carboxyl group.

5. The aqueous paving binder composition according to Claim 4, wherein said functional group is an epoxy group.

6. The aqueous paving binder composition according to any one of Claims 1 to 5, wherein the amount of said water-soluble or water-dispersible polyester is in the range of 2 to 50% by mass, based on said synthetic resin.

7. A method for treating a surface of a pavement comprising applying the aqueous paving binder composition according to any one of Claims 1 to 6 on the surface and drying it.
